# EUROPEAN PATENT APPLICATION

(11) **EP 2 908 568 A1**
(43) Date of publication of application: **19.08.2015**
(21) Application number: 14305221.5
(22) Date of filing: 18.02.2014
(51) Int. Cl.: H04W 12/04, H04W 8/20

(54) **Method of provisioning a server with a group of keys**

(71) Applicant: Gemalto SA, 92190 Meudon (FR)
(72) Inventor: Gattone, Alain, 13705 La Ciotat (FR); Amiel, Patrice, 13705 La Ciotat (FR); Berard, Xavier, 13705 La Ciotat (FR); Pico, Richard, 13705 La Ciotat (FR)

(57) **Abstract**

The invention is a method of provisioning a remote server with a group of randomized keys, each of the randomized keys being uniquely associated with a UICC belonging to a plurality of UICCs and required for accessing a subscription service. The remote server is automatically provisioned with a randomized key of the group only when the UICC uniquely associated with this randomized key establishes a secure channel with the remote server for the first time.

## Description

### (Field of the invention)

The present invention relates to methods of provisioning a server with a group of keys. It relates particularly to methods of provisioning a remote server with a group of randomized keys wherein each of the randomized keys is uniquely associated with a UICC belonging to a group of UICCs.

### (Background of the invention)

A UICC (Universal Integrated Circuit Card) is a secure element embedding SIM applications for telecommunication purposes. A secure element can be installed, fixedly or not, in a terminal, like a mobile phone for example. In some cases, the terminals are constituted by machines that communicate with other machines for M2M (Machine to Machine) applications.

Secure elements are tamper resistant components which are used in a device to provide the security, confidentiality, and multiple application environments required to support various business models. They are generally small devices comprising a memory, a processor and an operating system for computing treatments. Such secure elements may comprise a plurality of memories of different types, like nonvolatile memory and volatile memory. They are called "secure" because they are able to control the access to the data they contain and to authorize or not the use of data by other machines. The secure elements may also provide computation services based on cryptographic components. In general, secure elements have limited computing resources and limited memory resources and they are intended to be connected to a host machine which provides them with electric power. Secure elements may be removable or fixed to a host machine. For example, smart cards are a kind of secure elements.

It is known to solder or weld the secure element in a host device, in order to get it dependent of this host device. This is done in M2M (Machine to Machine) applications. The same objective is reached when a chip (a secure element) containing a Payment application, SIM or USIM applications and files is contained in the host device. The chip is for example soldered to the mother-board of the host device or machine and constitutes an embedded-secure element (eSE).

In order to provide services related to a subscription, the UICC and an administration server must store secret data (e.g. usually a secret key uniquely associated with the UICC).

An administration server is intended to manage one or several sets of UICCs. In order to simplify the provisioning of those secret data in such administration servers, it is known a possibility to generate the secret data of each UICC belonging to one set by using a unique mother key (also named master key). This kind of generation is generally performed by taking as input parameters both the mother key and a unique identifier (e.g. the serial number of the UICC) corresponding to the UICC.

Unfortunately, if the value of the master key is known by a hacker, all secret data of the set of UICCs are endangered since they are derived from the same unique master key.

It is known to provision a UICC from the administration server. This step is preceded by one of the following phases: either the server generates itself the secret data dedicated to the UICC or the secret data dedicated to the UICC is generated by another machine and sent to the server which in turn send the secret data to the relevant UICC.

There is a need for increasing the security level of the management of the secret data during the provisioning phase.

### (Summary of the Invention)

An object of the invention is to solve the above mentioned technical problem.

The object of the present invention is a method for provisioning a remote server with a group of randomized keys. Each of the randomized keys are uniquely associated with a UICC belonging to a plurality of UICCs and required for accessing a subscription service. The remote server is automatically provisioned with a randomized key belonging to the group only when the UICC which is uniquely associated with the randomized key establishes a secure channel with the remote server for the first time.

Advantageously, each randomized key of the group may be both generated and stored in a UICC belonging to the plurality of UICCs before the first establishment of the secure channel and each UICC belonging to the plurality of UICCs may automatically send its associated randomized key to the remote server when the each UICC establishes the secure channel with the remote server for the first time.

Advantageously, each of the randomized keys may be generated in the UICC associated with the randomized key when the UICC associated with the randomized key establishes the secure channel with the remote server for the first time and each UICC associated with the randomized key may send its associated randomized key to the remote server when said each UICC establishes the secure channel with the remote server for the first time.

Advantageously, each of the randomized keys may be generated in the remote server when the UICC associated with the randomized key establishes the secure channel with the remote server for the first time and the remote server may send the randomized key to the UICC associated with the randomized key.

Advantageously, each of the randomized keys may be generated in both the remote server and the UICC associated with the randomized key when said UICC establishes the secure channel with the remote server for the first time.

Advantageously, the secure channel may be established using first and second secret data. The first secret data may be stored in the remote server and the second secret data may be stored in the UICC before the UICC establishes the secure channel with the remote server for the first time.

Another object of the invention is a system comprising a remote server and a plurality of UICCs. Each UICC of the plurality of UICCs is configured to establish a secure channel with the remote server. The remote server is configured to get a randomized key of a group of randomized keys in which each of the randomized keys is uniquely associated with a UICC belonging to the plurality of UICCs only when the secure channel is established for the first time between the UICC which is uniquely associated with the randomized key and the remote server, the randomized key being required for accessing a subscription service.

Advantageously, a UICC of the plurality of UICCs has its own non volatile memory and may be configured to retrieve its associated randomized key from its own non volatile memory and to automatically send its associated randomized key to the remote server when the UICC establishes the secure channel with the remote server for the first time.

Advantageously, a UICC of the plurality of UICCs may comprise a generator configured to generate a randomized key associated with the UICC and the UICC may comprise a communicating agent configured to send the randomized key associated with the UICC to the remote server when the UICC establishes the secure channel with the remote server for the first time.

Advantageously, a UICC of the plurality of UICCS may comprise a first generator configured to generate a randomized key associated with the UICC. The remote server may comprise a second generator configured to generate the randomized key associated with the UICC. The UICC may comprise a first checking agent and the remote server may comprise a second checking agent. These first and second checking agents may be configured to successfully generate and exchange a control data reflecting the correct generation of the randomized key associated with the UICC in both the remote server and the UICC.

### (Brief description of the drawings)

Other characteristics and advantages of the present invention will emerge more clearly from a reading of the following description of a number of preferred embodiments of the invention with reference to the corresponding accompanying drawings in which:
- Figure 1 depicts schematically a system comprising a server and a group of UICCs administrated by the server according to the invention;
- Figure 2 is another example of server and a UICC managed by the server according to the invention;
- Figure 3 is a first example of a flowchart for managing the provisioning of secret data between a server and a UICC according to the invention;
- Figure 4 is a second example of a flowchart for managing the provisioning of secret data between a server and a UICC according to the invention;
- Figure 5 is a third example of a flowchart for managing the provisioning of secret data between a server and a UICC according to the invention; and
- Figure 6 is a fourth example of a flowchart for managing the provisioning of secret data between a server and a UICC according to the invention.

### (Detailed description of the preferred embodiments)

The present invention applies to any kind of secure element including UICC, soldered eSE, removable SE or such chips containing the same applications than the chips comprised in a UICC. A parallel can be done for UICCs that are not totally linked to devices but that are removable with difficulty because they are not intended to be removed, located in host devices that are distant or deeply integrated in machines. A special form factor of the UICCS (very small for example and therefore not easy to handle) can also be a reason to consider it as in fact integrated in a host device. The same applies when a UICC is integrated in a machine that is not intended to be opened.

In this document, the term « provisioning » refers to the situation to provide a data to a device and to permanently store this data in a memory accessible by the device.

Unlike a set of derived keys, a set of randomized keys is generated based on random value so that each randomized key is fully independent of the other keys.

A principle of the invention is that the first establishment of a secure channel between a remote server and a UICC belonging to a preset plurality of UICCs automatically triggers the provisioning of the remote server with a randomized key associated with this UICC.

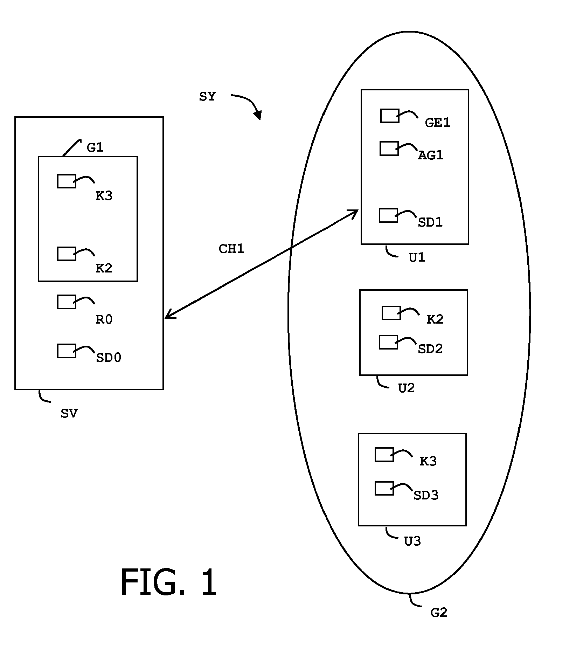

**Figure 1** shows an example of architecture of a system SY comprising a remote administration server SV and a group G2 of UICCS according to the invention.

The example of Figure 1 corresponds to a scheme where the randomized key are generated on board (into each UICC) then sent to the administrative server SV.

The group G2 comprises three UICCs U1, U2 and U3. In this example, the UICCs are connected to as many mobile phones allowing accessing a Telecom network for communicating with the server SV.

Although the UICC U1 is more detailed than the other at Figure 1, all UICCs of the group G2 are of the same type and have similar capabilities.

The UICC U1 comprises a secret data SD1 which is required for establishing a secure channel with the distant server SV. The UICC U1 comprises a generator GE1 which is configured to generate a randomized key K1 associated with the UICC U1. In a preferred embodiment, the generator GE1 is based on a pseudo-random generator and is configured to check the compliance of the generated value with a list of mathematical criteria related to security constraint. (Ex: the generated value must be different from zero.) The UICC U1 comprises a communicating agent AG1 which is configured to send the randomized key K1 to the remote server SV when the secure channel CH1 is established between the UICC U1 and the remote server SV for the first time.

Similarly, the UICC U2 and U3 comprise a secret data SD2, respectively SD3, which is required for establishing a secure channel with the distant server SV.

In one example, each secret data SD1, SD2 and SD3 has its own unique value and the remote administration server SV comprises a database containing corresponding secret values and an identifier of their associated UICC.

In another example, the remote administration server SV comprises a secret data SD0 which is required for establishing a secure channel with all UICCs of the group G2.

The administration server SV comprises a recording agent R0 able to decipher a key received through the secure channel CH1 and to store the key in allocating the corresponding UICC.

At Figure 1, the server SV is shown in a state where it has already received only two randomized keys (K2 and K3) among the three randomized keys (K1, K2 and K3) of the group G1. The randomized key K1 has not been generated.

It assumed that each of these randomized keys is uniquely associated with a UICC belonging to the group G2 of UICCs.

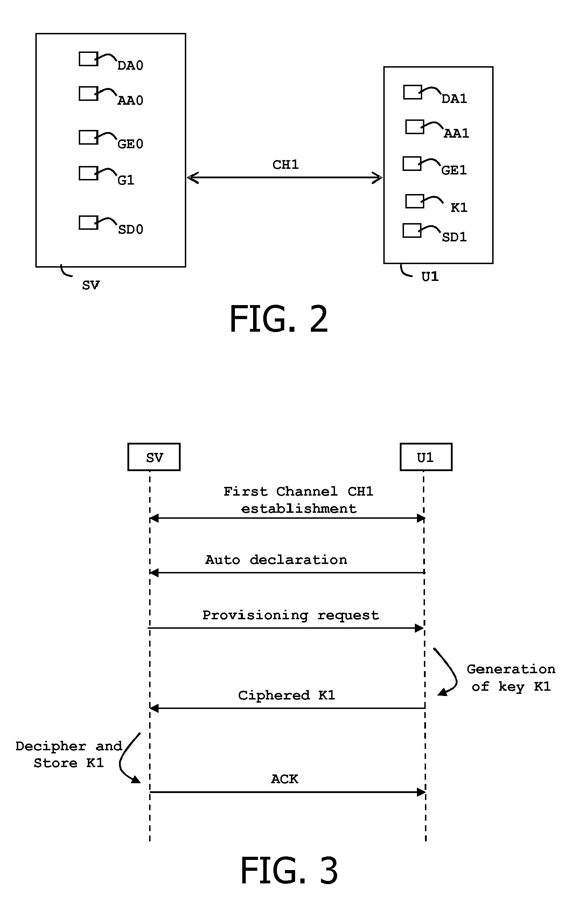

**Figure 2** shows an example of architecture of a remote administration server SV and a UICC U1 managed by the remote administration server SV according to the invention.

The example of Figure 2 corresponds to a scheme where the randomized key is generated in parallel in both sides and is not conveyed between the UICC and the administrative server SV.

The UICC U1 comprises a secret data SD1 which is required for establishing a secure channel with the distant server SV. The UICC U1 comprises a generator GE1 which is configured to generate a randomized key K1 associated with the UICC U1 when the secure channel CH1 is established between the UICC U1 and the remote server SV for the first time.

The UICC U1 comprises a checking agent AA1 and a declaration agent DA1. The declaration agent DA1 is configured to check if the secure channel CH1 is established between the UICC U1 and the remote server SV for the first time and to send to the server SV an identifier of the UICC U1. Preferably, the declaration agent DA1 is able to send an auto-declaration message (comprising the identifier of the UICC U1) to the administration server SV.

The remote administration server SV comprises a secret data SD0 which is required for establishing a secure channel CH1 with the UICC U1. The administration server SV comprises a generator GE0 configured to generate the randomized key K1 associated with the UICC U1. The administration server SV comprises a discovery agent DA0 which is configured to trigger the provisioning request when it receives the identifier of the UICC U1 for the first time. The administration server SV comprises checking agent AA0. The checking agents AA1 and AA0 are configured to successfully generate and exchange a control data reflecting the correct generation of the randomized key K1 in both sides. For example, these checking agents may run a mutual authentication based on the randomized keys generated into the remote server SV and into the UICC U1.

**Figure 3** shows a first example of a flowchart for managing the provisioning of secret data between an administration server SV and a UICC U1 according to the invention.

The server SV and the UICC U1 are assumed to be similar to those described at Figure 1.

At a first step, the server SV and the UICC U1 establish a first secure channel CH1. For instance, this secure channel CH1 may be temporary established according to the following sub-steps. The UICC U1 may send an "Open channel" message to the server SV. Then a handshake phase may be performed with a mutual authentication using the secret data SD0 and SD1.

At a second step, the declaration agent DA1 of the UICC U1 sends an auto-declaration message containing an identifier of UICC U1. For instance, this identifier may be a serial number allocated to the UICC U1.

At a third step, the discovery agent DA0 of the server SV send a provisioning request to the UICC U1 since it received the identifier of the UICC U1 for the first time.

At a fourth step, in response to receiving the provisioning request, the generator GE1 generates a randomized key K1 allocated to the UICC U1.

At a fifth step, the generated randomized key K1 is sent to the server through the secure channel CH1. In a preferred embodiment, the randomized key K1 is encrypted before being conveyed through the channel CH1.

At a sixth step, the server SV retrieves the randomized key K1 (and decipher the randomized key if needed), allocates the randomized key K1 to the UICC U1 and stores the randomized key K1 as a part of the group G1.

At a seventh step, the server SV sends an acknowledgement message to the UICC U1.

The steps three to seven (or four to seven) can loop in case the UICC U1 includes a key set comprising several randomized keys.

Advantageously, a PKI mechanism may be used for enhancing the security level of the conveyed randomized key. For instance, the randomized key may be ciphered using the public key of the server SV and deciphered using the secret key of the server SV.

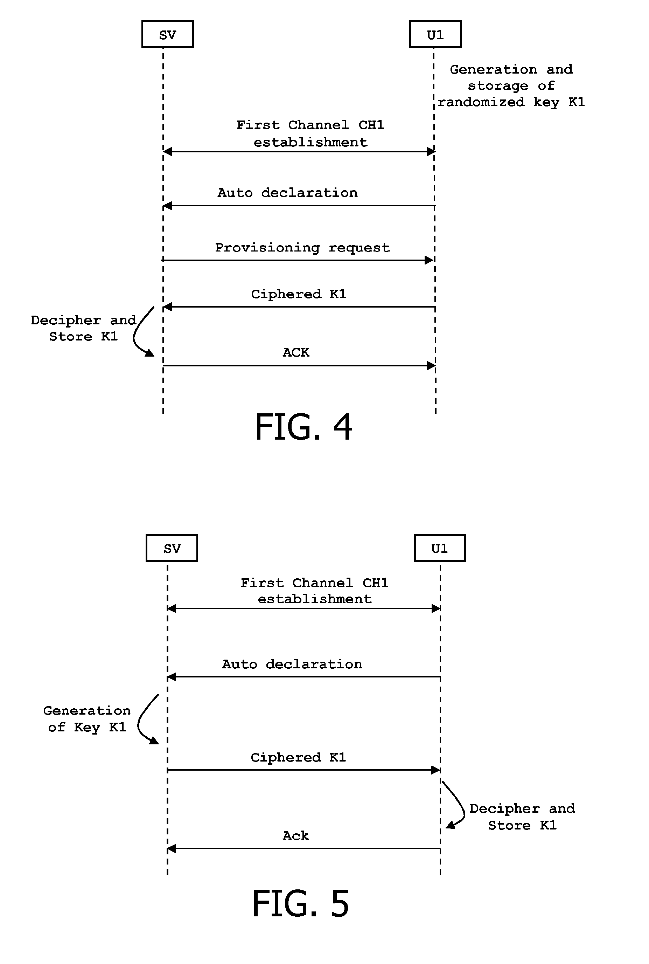

**Figure 4** shows a second example of a flowchart for managing the provisioning of secret data between an administration server SV and a UICC U1 according to the invention.

The server SV and the UICC U1 are assumed to be similar to those described at Figure 1.

At a first step, a generator module generates a randomized key K1 allocated to the UICC U1. The generator module may be the generator GE1 as described at Figure 1. Alternatively, the generator module may be embedded in another machine in charge of the generation of randomized keys. In such a case, the UICC U1 has the capability to securely get the generated randomized key K1 from the other machine. This transfer of the randomized key K1 may be performed in a secure place before the issuance of the UICC for instance.

At a second step, the server SV and the UICC U1 establish a first secure channel CH1.

At a third step, the declaration agent DA1 of the UICC U1 sends an auto-declaration message containing an identifier of UICC U1. For instance, this identifier may be a serial number allocated to the UICC U1.

At a fourth step, the discovery agent DA0 of the server SV send a provisioning request to the UICC U1 since it received the identifier of the UICC U1 for the first time.

At a fifth step, the randomized key K1 is sent to the server through the secure channel CH1. In a preferred embodiment, the randomized key K1 is encrypted before being conveyed through the channel CH1.

At a sixth step, the server SV retrieves the randomized key K1 (and decipher the randomized key if needed), allocates the randomized key K1 to the UICC U1 and stores the randomized key K1 as a part of the group G1. At a seventh step, the server SV sends an acknowledgement message to the UICC U1.

The steps five to six can loop in case the UICC U1 includes a key set comprising several randomized keys. Alternatively, several randomized keys may be sent in a single message (as for the PUTKEY command).

**Figure 5** shows a third example of a flowchart for managing the provisioning of secret data between an administration server SV and a UICC U1 according to the invention.

At a first step, the server SV and the UICC U1 establish a secure channel CH1 for the first time.

At a second step, the UICC U1 sends an auto-declaration message containing an identifier of UICC U1. For instance, this identifier may be an alphanumeric string uniquely allocated to the UICC U1.

At a third step, the discovery agent DA0 of the server SV triggers the generation of a randomized key K1 into the server SV. Then the server allocates this randomized key K1 to the UICC U1 and stores it. At this stage, the server SV is provisioned with the relevant randomized key.

At a fourth step, the server SV sends the generated randomized key K1 to the UICC U1 through the secure channel CH1. In a preferred embodiment, the randomized key K1 is encrypted before being conveyed through the channel CH1.

At a fifth step, the UICC U1 retrieves the randomized key K1 (and deciphers the randomized key if needed) and stores the randomized key K1 as its own randomized key K1.

At a sixth step, the UICC U1 sends an acknowledgement message Ack to the server SV in order to reflect the correct achievement of the operation.

The method can partly loop in case of several randomized keys to send.

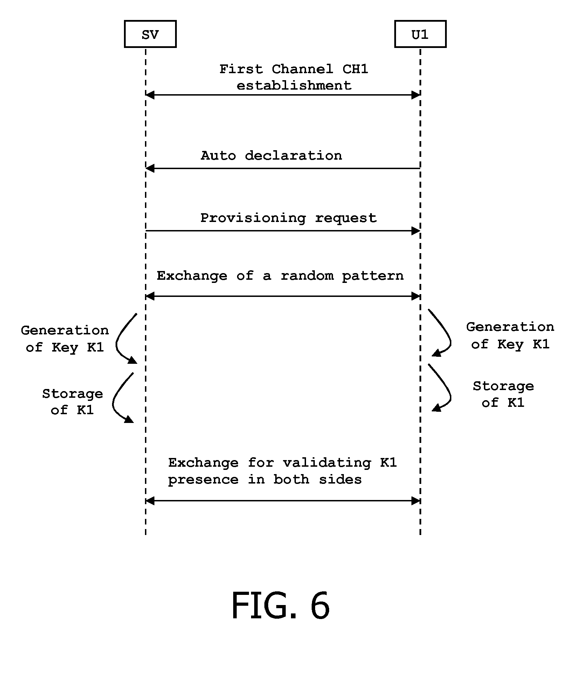

**Figure 6** shows a fourth example of a flowchart for managing the provisioning of secret data between an administration server SV and a UICC U1 according to the invention.

The server SV and the UICC U1 are assumed to be similar to those described at Figure 2.

At a first step, the server SV and the UICC U1 establish a first secure channel CH1.

At a second step, the UICC U1 sends an auto-declaration message containing an identifier of UICC U1. For instance, this identifier may be the IMSI (International Mobile Subscriber Identity) of the UICC U1.

At a third step, the server SV sends a provisioning request to the UICC U1 since it received the identifier of the UICC U1 for the first time.

At a fourth step, in response to receiving the provisioning request, the UICC U1 generates a randomized key K1 allocated to the UICC U1. In parallel, the server SV generates the same randomized key K1 (e.g. same value) and allocates it to the UICC U1. These generation operations take as input parameter a random pattern which is sent into the provisioning request.

At a fifth step, the generated randomized key K1 is stored in both sides.

At a next step, the UICC U1 and server SV generate and exchange a control data reflecting the generation of the randomized key K1 with the same value in both sides.

The randomized key K1 is assumed to be required for accessing a subscription service thanks to the UICC U1. For instance, randomized key K1 may be a secret key or a public key (in a PKI scheme) used for managing a secure channel between the UICC and the server for accessing a distant service or a remote application. It should be noted that the purpose of the randomized key K1 is to durably remain active in both the server SV and the UICC. In contrast, the purpose of the secret data SD0 and SD1 is to establish a temporary secure channel for allowing the provisioning operation. These secret data SD0 and SD1 may be deleted after the provisioning operation.

Advantageously, the server SV may comprise a white list which defines a set of UICCs that the server SV is allowed to manage. Thus the server SV is able to reject "open channel" messages and auto-declaration messages coming from an unauthorized secure element.

It must be understood, within the scope of the invention, that the above-described embodiments are provided as non-limitative examples. In particular, the number of randomized keys generated for an UICC may be large.

## Claims

1. A **method** for provisioning a remote server (SV) with a group (G1) of randomized keys (K1, K2, K3), each of the randomized keys (K1, K2, K3) being uniquely associated with a UICC belonging to a plurality (G2) of UICCs and required for accessing a subscription service,
**characterized in that** the remote server (SV) is automatically provisioned with a randomized key (K1) of the group (G1) only when the UICC (U1) which is uniquely associated with said randomized key (K1) establishes a secure channel (CH1) with the remote server (SV) for the first time.

2. A method according to claim 1, wherein each randomized key of the group (G1) is both generated and stored in a UICC belonging to the plurality (G2) of UICCs before the first establishment of the secure channel (CH1) and wherein each UICC belonging to the plurality (G2) automatically sends its associated randomized key to the remote server (SV) when said each UICC establishes the secure channel (CH1) with the remote server (SV) for the first time.

3. A method according to claim 1, wherein each of the randomized keys (K1, K2, K3) is generated in the UICC associated with said randomized key when the UICC associated with said randomized key establishes the secure channel (CH1) with the remote server (SV) for the first time and wherein each UICC associated with said randomized key sends its associated randomized key to the remote server (SV) when said each UICC establishes the secure channel (CH1) with the remote server (SV) for the first time.

4. A method according to claim 1, wherein each of the randomized keys (K1, K2, K3) is generated in the remote server (SV) when the UICC associated with the randomized key establishes the secure channel (CH1) with the remote server (SV) for the first time and wherein the remote server (SV) sends the randomized key to the UICC associated with the randomized key.

5. A method according to claim 1, wherein each of the randomized keys (K1, K2, K3) is generated in both the remote server (SV) and the UICC associated with the randomized key when said UICC establishes the secure channel (CH1) with the remote server (SV) for the first time.

6. A method according to claim 1, wherein the secure channel (CH1) is established using first and second secret data (SDO, SD1) and wherein said first secret data (SD0) is stored in the remote server (SV) and said second secret data (SD1) is stored in the UICC before the UICC (U1) establishes the secure channel (CH1) with the remote server (SV) for the first time.

7. A **system** (SY) comprising a remote server (SV) and a plurality (G2) of UICCs, each UICC of said plurality (G2) being configured to establish a secure channel (CH1) with the remote server (SV),
**characterized in that** said remote server (SV) is configured to get a randomized key of a group (G1) of randomized keys (K1, K2, K3) in which each of the randomized keys (K1, K2, K3) is uniquely associated with a UICC belonging to the plurality (G2) of UICCs only when the secure channel (CH1) is established for the first time between the UICC which is uniquely associated with said randomized key and the remote server (SV), said randomized key being required for accessing a subscription service.

8. A system according to claim 7, wherein a UICC of said plurality (G2) has its own non volatile memory and is configured to retrieve its associated randomized key from its own non volatile memory and to automatically send its associated randomized key to the remote server (SV) when said UICC establishes the secure channel (CH1) with the remote server (SV) for the first time.

9. A system according to claim 7, wherein a UICC of said plurality (G2) comprises a generator (GE1) configured to generate a randomized key associated with said UICC and wherein said UICC comprises a communicating agent (AG1) configured to send the randomized key associated with said UICC to the remote server (SV) when said UICC establishes the secure channel (CH1) with the remote server (SV) for the first time.

10. A system according to claim 7, wherein a UICC (U1) of said plurality (G2) comprises a first generator (GE1) configured to generate a randomized key (K1) associated with said UICC (U1), wherein the remote server (SV) comprises a second generator (GE0) configured to generate the randomized key (K1) associated with said UICC (U1) and wherein said UICC (U1) comprises a first checking agent (AA1) and the remote server (SV) comprises a second checking agent (AA0), said first and second checking agents (AA1, AAO) being configured to successfully generate and exchange a control data reflecting the correct generation of the randomized key (K1) associated with the UICC (U1) in both the remote server (SV) and said UICC (U1).
